# EUROPÄISCHE PATENTSCHRIFT

(11) **EP 2 038 083 B1**
(45) Veröffentlichungstag und Bekanntmachung des Hinweises auf die Patenterteilung: **13.09.2017**
(21) Anmeldenummer: 07764418.5
(22) Anmeldetag: 30.06.2007
(51) Int. Cl.: B23K 13/01, B23P 6/00, F01D 5/00, B23K 101/34, B23K 103/14, B23K 101/00

(54) **VERFAHREN FÜR DIE REPARATUR UND/ODER DEN AUSTAUSCH VON EINZELELEMENTEN EINES BAUTEILS EINER GASTURBINE**
METHOD FOR REPAIRING AND/OR REPLACING INDIVIDUAL ELEMENTS OF A GAS TURBINE COMPONENT
PROCÉDÉ DE RÉPARATION ET/OU DE REMPLACEMENT D'ÉLÉMENTS INDIVIDUELS D'UNE PIÈCE D'UNE TURBINE À GAZ

(30) Priorität: 07.07.2006 DE 102006031388
(43) Veröffentlichungstag der Anmeldung: 25.03.2009
(73) Patentinhaber: MTU Aero Engines AG, 80995 München (DE)
(72) Erfinder: EICHMANN, Wolfgang, 82178 Puchheim (DE); HEUTLING, Falko, 81377 München (DE); UIHLEIN, Thomas, 85221 Dachau (DE); GINDORF, Alexander, 85247 Schwabhausen (DE)
(86) Internationale Anmeldenummer: PCT/DE2007/001166
(87) Internationale Veröffentlichungsnummer: WO 2008/003295

(56) Entgegenhaltungen:
- EP-A- 1 065 145
- WO-A-00/03834
- WO-A-2006/084439
- DE-A1- 19 858 702
- DE-A1-102006 012 662
- US-A- 5 794 338
- US-A- 6 107 598
- US-A1- 2006 035 027

## Beschreibung

Die vorliegende Erfindung betrifft ein Verfahren gemäß dem Oberbegriff des Anspruchs 1 für die Reparatur und/oder den Austausch von Einzelelementen eines Bauteils einer Gasturbine, insbesondere für die Reparatur und/oder den Austausch von einem auf einem Rotorträger einer Gasturbine angeordneten Schaufelblatt oder einem Teil des Schaufelblatts, wobei die Bauteile zumindest teilweise mindestens eine Verschleiß- und/oder Erosionsschutzschicht aufweisen.

Aus dem Stand der Technik sind verschiedene Verfahren und Vorrichtungen zum Verbinden von metallischen Bauelementen mittels induktivem Hochfrequenzpressschweißens bekannt. So beschreibt zum Beispiel die DE 198 58 702 A1 ein Verfahren gemäß dem Oberbegriff des Anspruchs 1 zum Verbinden von unbeschichteten Schaufelteilen einer Gasturbine, wobei ein Schaufelblattabschnitt und wenigstens ein weiteres Schaufelteil bereitgestellt werden. Dabei werden entsprechende Verbindungsflächen dieser Elemente im Wesentlichen fluchtend beabstandet zueinander positioniert und anschließend durch Erregen eines Induktors mit hochfrequentem Strom und durch Zusammenfahren unter Berührung ihrer Verbindungsflächen miteinander verschweißt. Dabei wird der Induktor mit einer konstanten Frequenz, die im Allgemeinen über 0,75 MHz liegt, erregt. Die Frequenz wird zudem in Abhängigkeit von der Geometrie der Verbindungsflächen gewählt. Bei dem induktiven Hochfrequenzpressschweißen ist die gleichzeitige und homogene Erwärmung der beiden Schweißpartner für die Qualität der Fügestelle von entscheidender Bedeutung. Die fertigen Bauteile werden mit Verschleiß- und Erosionsschutzschichten überzogen. Dabei kann es sich insbesondere um Hartstoffschichten handeln. Verschleißschutzschichten, wie zum Beispiel Korrosions- und Oxidationsschutzschichten sind bekannt und werden insbesondere in Teilen von Turbinen oder Flugtriebwerken wie auch Brennkammern eingesetzt. Als Heißkorrosionsschutzschichten werden sogenannte MCrAlY-Auflageschichten verwendet, wie sie zum Beispiel in der US-A-4080486, der EP-B1-0486489 und der US-A-4585481 beschrieben sind. Zudem können diese MCrAlY-Auflageschichten als Haftvermittler oder als Haftschicht zwischen dem metallischen Substrat, auf die die Schutzschicht aufgetragen wird, und einer keramischen Deckschicht verwendet werden. Die Aufbringung der Schutzschicht erfolgt dabei insbesondere durch thermische Spritzverfahren, wie z. B. Flammspritzen, Hochgeschwindigkeitsflammspritzen, Detonationsspritzen, Plasmaspritzen, Lichtbogenspritzen, Laserspritzen oder Schmelzbadspritzen.

Die Reparatur oder der Austausch von derart beschichteten Bauteilen einer Gasturbine stellt besondere Anforderungen an die Technik, da die Verschleiß- und Erosionsbeständigkeit derartiger Bauteile auch nach einer Reparatur oder einem Austausch zwingend erhalten bleiben muss. So erfolgt zum Beispiel die Reparatur eines Schaufelblatts einer Gasturbine entweder durch eine völlige Entschichtung, anschließende Reparatur und eine nachfolgende Wiederbeschichtung des entsprechenden Bauteils. Damit verbunden sind nachteiligerweise hohe Kosten durch die Ent- und Beschichtung sowie den hohen Abdeckaufwand von Bereichen, die nicht mit der Entschichtungslösung in Berührung kommen dürfen. Zudem besteht ein hohes Risiko des Abtrags des Grundwerkstoffs des Bauteils durch die Entschichtungslösung. Des Weiteren kann versucht werden, mit konventionellen Fügeverfahren wie Mikroplasmaschweißen oder Laserpulverauftragsschweißen die Reparatur durchzuführen. Dabei ist jedoch auch eine vorherige Entschichtung des Bauteils notwendig, da die Verschleiß- oder Erosionsschutzschicht sonst in die aufschmelzenden Bereiche des Grundwerkstoffes mit eingebaut wird. Neben der massiven Wärmebeeinflussung bei Bauteilen mit geringeren Materialquerschnitten, wie zum Beispiel Schaufeln, kommt es durch den Einbau der Schichtelemente zu undefinierten negativen Gefügebeeinflussungen des Bauteils. Zudem ist bei den konventionellen Fügeverfahren wegen der relativ großen Wärmeeinflusszone ein größerer Abstand zu kritischen Zonen des Bauteils einzuhalten. Derartige Zonen sind zum Beispiel Zonen mit den höchsten Erosionsbelastungen der Bauteile. Aufgrund der dargestellten Problematik ist es üblich, mit Verschleiß- oder Erosionsschutzschichten beschichtete Einzelschaufeln einer Gasturbine nach Verbrauch der Schicht zu verschrotten. Ursache hierfür ist zudem, dass die Schutzschichten insbesondere im Fall von keramischen Schichten wie TiN im Vergleich zu üblichen Verdichterwerkstoffen wie Titan-Legierungen elektrochemisch sehr edel sind und somit kaum ohne einen Grundwerkstoffangriff entfernbar sind. Zudem können einige der dargestellten Entschichtungslösungen aufgrund ihrer Umwelt- und Gesundheitsschädlichkeit nicht durchgeführt werden. Im Falle von integralen Bauteilen wie BLISK-Verdichtern bedeutet die Verschrottung einen hohen Wertverlust, da hierbei auch die unbeschädigten Teile, wie zum Beispiel die Scheibe des Verdichters, ebenfalls verloren gehen.

Es ist daher Aufgabe der vorliegenden Erfindung ein gattungsgemäßer Verfahren für die Reparatur und/oder den Austausch von Einzelelementen eines Bauteils einer Gasturbine bereitzustellen, bei dem eine schnelle, kostengünstige, sichere und dauerhafte Verbindung von beschichteten Gasturbinenelementen gewährleistet ist.

Gelöst wird diese Aufgabe durch ein Verfahren gemäß den Merkmalen des Anspruchs 1.

Vorteilhafte Ausgestaltungen der Erfindung sind in den Unteransprüchen beschrieben.

Das erfindungsgemäße Verfahren für die Reparatur und/oder den Austausch von Einzelelementen eines Bauteils einer Gasturbine, insbesondere für die Reparatur und/oder den Austausch von einem auf einem Rotorträger einer Gasturbine angeordneten Schaufelblatt oder einem Teil des Schaufelblatts, wobei die Bauteile zumindest teilweise mindestens eine Verschleiß- und/oder Erosionssehutzschicht aufweisen, ist dadurch gekennzeichnet, dass ein beschichtetes oder teilweise beschichtetes Ersatzelement bereitgestellt wird, welches aus einem mit dem Einzelelement artgleichen oder verschleißfesteren Material besteht.

Im Falle des Verbindens eines unbeschichteten Ersatzelements kann anschließend ein Beschichten des unbeschichteten Ersatzelements erfolgen. Die erfindungsgemäße Verwendung des induktiven Nieder- und Hochfrequenzpressschweißverfabrens erlaubt es, ohne eine vorherige Entschichtung der Bauteilelemente und einen entsprechenden aufwändigen Abdeckaufwand, eine Reparatur und/oder einen Austausch der entsprechenden Einzelelemente durchzuführen. Dabei kann vorteilhafterweise aufgrund der geringen Wärmeeinflusszone, die bei dem induktiven Nieder- und Hochfrequenzpressschweißen auftritt, die Reparatur auch sehr nahe an mechanisch kritischen Zonen des zu reparierenden Bauteils tung die Verbindungsfläche des Ersatzelements gegen die entsprechende Verbindungselementfläche des Bauteils verfahren und gedrückt wird. Durch die Einspannvorrichtung ist einerseits gewährleistet, dass das Ersatzelement lagerichtig an das Bauteil verfahren wird. Zudem wird durch die Einspannvorrichtung die notwendige Stauchkraft auf das Ersatzelement aufgebracht, ohne dass das Ersatzelement einer übermäßigen Druckbeanspruchung ausgesetzt wird. Dabei kann das Ersatzelement ein Schaufelblatt oder Schaufelblattteil sein, welches einer entsprechenden Verbindungsfläche eines Rotorträgers oder eines Schaufelblattansatzes des Rotorträgers zugeführt wird.

In einer weiteren vorteilhaften Ausgestaltung des erfindungsgemäßen Verfahrens wird vor und während des Verfahrens des Ersatzelements gegen das Bauteil eine Positions- und Lagekontrolle des Ersatzelements und/oder des Bauteils durchgeführt. Die Positions- und Lagekontrolle kann dabei mittels einer optischen Messvorrichtung durchgeführt werden. Dadurch ergibt sich ein exaktes Positionieren der Fügepartner zum endkonturnahen Fügen des Ersatzelements, insbesondere der Schaufel auf den Rotorträger.

In einer weiteren vorteilhaften Ausgestaltung des erfindungsgemäßen Verfahrens werden die beim induktiven Nieder- und Hochfrequenzpressschweißen verwendeten Frequenzen aus einem Bereich zwischen 0,05 - 2,5 MHz gewählt. Dabei können mindestens zwei unterschiedliche Frequenzen induziert werden. Es hat sich überraschenderweise herausgestellt, dass nicht nur relativ hohe Frequenzen, sondern auch entsprechend niedrigere Frequenzbereiche für das induktive Frequenzpressschweißen verwendet werden können. Die Verwendung unterschiedlicher Frequenzen hängt insbesondere von der Geometrie der zu fügenden Bauteile, insbesondere der entsprechenden Querschnittsgeometrien der zu fügenden Partner ab. Durch die Verwendung unterschiedlicher Frequenzen kann eine gleichzeitige und homogene Erwärmung der beiden Schweißpartner auch bei komplexeren Geometrien durchgeführt werden. Dies ist für die Qualität der Fügestelle von entscheidender Bedeutung.

Ein erfindungsgemäßes Bauteil wird nach einem im Vorhergehenden beschriebenen Verfahren hergestellt. Bei diesen Bauteilen handelt es sich um so genannte BLINGs ("Bladed Ring") oder BLISKs ("Bladed Disc") von Gasturbinentriebwerken.

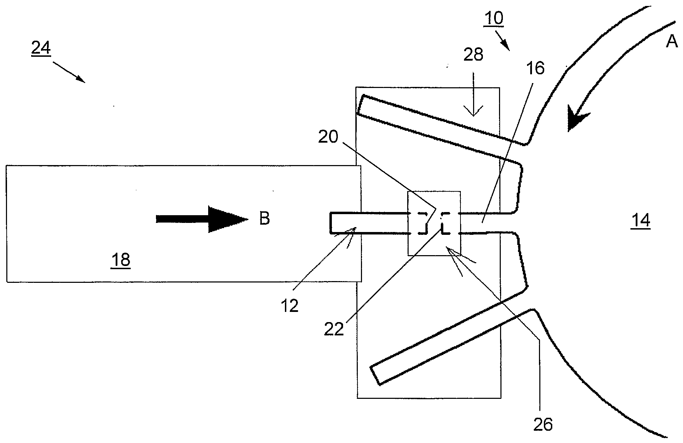

Weitere Vorteile, Merkmale und Einzelheiten der Erfindung ergeben sich aus der nachfolgenden Beschreibung eines in der Figur zeichnerisch dargestellten Ausführungsbeispiels.

Dabei zeigt die Figur eine schematische Darstellung einer Vorrichtung zur Durchführung des erfindungsgemäßen Verfahrens.

Die Figur zeigt eine Vorrichtung 24 zum Verbinden von mindestens einem beschichteten Ersatzelement 12, nämlich einem Schaufelblatt mit einem Bauteil 10. Das Bauteil 10 ist dabei ein so genannter BLISK. Die Verbindung des Schaufelblatts 12 erfolgt dabei mit einem Rotorträger 14 einer Gasturbine, nämlich einem Schaufelblattansatz 16 des Rotorträgers 14, wobei das Verbinden entsprechender Verbindungsflächen 20, 22 des Schaufelblatts 12 und des Schaufelblattansatzes 16 mittels eines induktiven Nider- oder Hochfrequenzpressschweißens erfolgt. Der vorhergehende Verfahrensschritt a), nämlich das Abtrennen eines beschädigten und/oder auszutauschenden beschichteten Einzelelements von dem beschichteten Bauteil 10 ist in der Figur nicht dargestellt.

Die Vorrichtung 24 besteht aus einem Generator 28 zur Erzeugung der notwendigen Schweißenergie und einem Induktor 26. Durch Erregen des Induktors 26 mit hochfrequentem Strom werden Verbindungsflächen 20, 22 des Ersatzelements 12 bzw. der Schaufel 12 und des Schaufelblattansatzes 16 erwärmt. Die Erwärmung erfolgt dabei bis mindestens nahe dem Schmelzpunkt der Materialien, aus denen die Schaufel 12 und der Schaufelblattansatz 16 hergestellt sind. In dem dargestellten Ausführungsbeispiel ist der Schaufelblattansatz 16 am Umfang einer Scheibe ausgebildet ist. Die Scheibe stellt dabei den so genannten BLISK-Rotor dar.

Des Weiteren erkennt man, dass eine Einspannvorrichtung 18 das Ersatzelement 12 bzw. das Schaufelblatt 12 in Pfeilrichtung B gegen den Schaufelblattansatz 16 drückt. Das Verfahren des Schaufelblatts 12 an den Schaufelblattansatz 16 erfolgt dabei bei genügend großer Erwärmung der Verbindungsflächen 20, 22. Diese ist dann gegeben, wenn die Verbindungsflächen 20, 22 nahezu aufgeschmolzen sind und einen teigigen Zustand erreichen.

Der Rotorträger 14 kann auf einem Drehtisch (nicht dargestellt) gelagert sein. Der Drehtisch und damit der Rotorträger 14 wird dabei in Pfeilrichtung A um ein definiertes Winkelmaß gedreht. Dadurch ergibt sich eine exakte Positionierung des Schaufelblattansatzes 16 zum Schaufelblatt 12 bzw. eine exakte Positionierung der entsprechenden Verbindungsflächen 20, 22 zueinander. Zudem wird durch die senkrechte Anordnung des Schaufelblatts 12 in der Vorrichtung 24 die Zugänglichkeit der Schweißstelle mit rückseitig angeordneter Induktionsspule für kleine und große Querschnitte gegeben. Üblicherweise liegt der Schweißbereich in einer Schutzgasatmosphäre, die entweder lokal erzeugt wird oder den gesamten Schweißbereich umfassen kann.

Die Vorrichtung 24 umfasst zudem mindestens eine Zuführvorrichtung zur automatischen Zufuhr der Ersatzelemente 12 bzw. der Schaufelblätter 12 aus einem Schaufelblatt-Reservoir (nicht dargestellt).

Das Schaufelblatt 12, die Schaufelblattteile oder der Rotorträger 14 können dabei aus unterschiedlichen oder ähnlichen metallischen Werkstoffen bestehen. Es ist aber auch möglich, dass die genannten Bauelemente aus ähnlichen metallischen Werkstoffen bestehen und durch unterschiedliche Herstellungsverfahren hergestellt sind. Dies betrifft zum Beispiel geschmiedete Bauelemente, durch Gussverfahren hergestellte Bauelemente, Bauelemente bestehend aus Einkristallen sowie gerichtet erstarrte Bauelemente.

Durch das Ausführungsbeispiel wird deutlich, dass das erfmdungsgemäße Verfahren sowohl für die Herstellung wie auch die Reparatur von Bauteilen einer Gasturbine geeignet ist.

## Patentansprüche

1. Verfahren für die Reparatur und/oder den Austausch von Einzelelementen eines Bauteils (10) einer Gasturbine, insbesondere für die Reparatur und/oder den Austausch von einem auf einem Rotorträger einer Gasturbine angeordneten Schaufelblatt oder einem Teil des Schaufelblatts,
wobei
* die Bauteile (10) zumindest teilweise mindestens eine Verschleiß- und/oder Erosionsschutzschicht aufweisen,
* ein beschädigtes und/oder auszutauschendes beschichtetes oder unbeschichtetes Einzelelement von dem Bauteil (10) abgetrennt wird,
* ein Ersatzelement (12) bereitgestellt wird,
* eine Zufuhr und ein Ausrichten des Ersatzelements (12) relativ zum Bauteil (10) erfolgt, und
* das Ersatzelement (12) mit dem Bauteil (10) verbunden wird,
* das Verbinden entsprechender Verbindungsflächen (20, 22) des Ersatzelements (12) und des Bauteils (10) mittels eines induktiven Nieder- oder Hochfrequenzpressschweißens erfolgt,
**dadurch gekennzeichnet, dass**
das Ersatzelement (12) ein beschichtetes oder teilweise beschichtetes Ersatzelement (12) ist, welches aus einem mit dem Einzelelement artgleichen oder einem verschleißfesteren Material besteht.

2. Verfahren nach Anspruch 1,
**dadurch gekennzeichnet, dass**
die Zufuhr des mindestens einen Ersatzelements (12), insbesondere des Schaufelblatts oder Schaufelblattteils automatisch aus mindestens einem Ersatzelement-Reservoir, insbesondere einem Schaufelblatt- und/oder Schaufelblattteil-Reservoir, orfolgt.

3. Verfahren nach Anspruch 1 oder 2,
**dadurch gekennzeichnet, dass**
das Ersatzelement (12) einer Einspannvorrichtung (18) zugeführt wird, wobei mittels der Einspannvorrichtung (18) die Verbindungsfläche (20) des Ersatzelements gegen die entsprechende Verbindungsfläche (22) des Bauteils (10) verfahren und gedrückt wird.

4. Verfahren nach einem der vorhergehenden Ansprüche,
dadurch gekenntzeichnet, dass
das Ersatzelement (12) ein Schaufelblatt oder Schaufelblattteil ist.

5. Verfahren nach einem der vorhergehenden Ansprüche,
**dadurch gekennzeichnet, dass**
die beim induktiven Nieder- oder Hochfrequenzpressschweißen verwendeten Frequenzen aus einem Bereich zwischen 0,05 - 2,5 MHz gewählt werden.

6. Verfahren nach einem der vorhergehenden Ansprüche,
**dadurch gekennzeichnet, dass**
beim induktiven Nieder- oder Hochfrequenzpressschweißen mindestens zwei unterschiedliche Frequenzen induziert werden.

7. Verfahren nach einem der vorhergehenden Ansprüche,
**dadurch gekennzeichnet, dass**
das Bauteil ein BLISK oder BLING ist.

## Claims

1. A method for repairing and/or replacing individual elements of a gas turbine component (10), particularly for repairing and/or replacing a blade or blade part arranged on a rotor support of a gas turbine,
wherein
* at least some of the components (10) are provided with at least one wear-resistant and/or erosion-resistant layer;
* a coated or uncoated individual element that is damaged and/or needs to be replaced is removed from the component (10);
* a replacement element (12) is provided;
* the replacement element (12) is fed and aligned relative to the component (10); and
* the replacement element (12) is connected to the component (10);
* corresponding contact areas (20, 22) of the replacement element (12) and the component (10) are connected by an inductive low-frequency and high-frequency pressure welding process;
**characterized in that**
the replacement element (12) is a coated or partially coated replacement element (12) comprised of a material that is of the same kind as the individual element or of a material that is more wear-resistant than a material of the individual element.

2. The method according to claim 1,
**characterized in that**
the step of feeding the replacement element (12), particularly the blade or blade part, takes place automatically from at least one replacement element reservoir, particularly a blade reservoir or blade part reservoir.

3. The method according to claim 1 or 2,
**characterized in that**
the replacement element (12) is fed to a clamping device (18), wherein a contact area (20) of the replacement element is moved and pressed against the corresponding contact area (22) of the component (10) by the clamping device (18).

4. The method according to any one of the preceding claims,
**characterized in that**
the replacement element (12) is a blade or blade part.

5. The method according to any one of the preceding claims,
**characterized in that**
the frequencies used in the inductive low-frequency or high-frequency pressure wielding process are selected from a range between 0,05-2.5 Mhz.

6. The method according to any one of the preceding claims,
**characterized in that**
at least two different frequencies are induced during the low-frequency or high-frequency pressure wielding process.

7. The method according to any one of the preceding claims,
**characterized in that**
the component is a BLISK or BLING.

## Revendications

1. Procédé de réparation et/ou de remplacement d'éléments individuels d'une pièce (10) d'une turbine à gaz, en particulier pour la réparation et/ou le remplacement d'une pale agencée sur un support de rotor d'une turbine à gaz ou d'une partie de la pale,
dans lequel :
* les pièces (10) présentent au moins en partie au moins une couche d'usure et/ou une couche de protection contre l'érosion,
* un élément individuel revêtu ou non revêtu endommagé et/ou à remplacer est séparé de la pièce (10),
* un élément de remplacement (12) est préparé,
* une mise en place et un malignement de l'élément individuel (12) sont effectués par rapport à la pièce (10) et
* l'élément de remplacement (12) est relié à la pièce (10),
* la liaison de surfaces de liaison correspondantes (20, 22) de l'élément de remplacement (12) et de la pièce (10) se fait par soudage inducteur sous pression à basse ou haute fréquence,
**caractérisé en ce que** :
l'élément de remplacement (12) est un élément de remplacement (12) revêtu ou partiellement revêtu qui est constitué d'un matériau analogue à celui de l'élément individuel ou d'un matériau résistant à l'usure.

2. Procédé selon la revendication 1,
**caractérisé en ce que** :
l'acheminement du au moins un élément individuel (12), en particulier de la pale ou de la partie de pale, se fait automatiquement à partir d'au moins un réservoir d'éléments de remplacement, en particulier d'un réservoir de pales et/ou d'un réservoir de parties de pales.

3. Procédé selon la revendication 1 ou 2,
**caractérisé en ce que** :
l'élément de remplacement (12) est acheminé à un dispositif au moyen d'un dispositif de montage (18), dans lequel, au moyen du dispositif de montage (18), la surface de liaison (20) de l'élément de remplacement est mise en place et pressée contre la surface de liaison correspondante de la pièce (10).

4. Procédé selon l'une quelconque des revendications précédentes,
**caractérisé en ce que** :
l'élément de remplacement (12) est une pale ou une partie de pale.

5. Procédé selon l'une quelconque des revendications précédentes,
**caractérisé en ce que** :
les fréquences utilisées lors du soudage inducteur sous pression à basse ou haute fréquence sont choisies dans une plage comprise entre 0,05 et 2,5 MHz.

6. Procédé selon l'une quelconque des revendications précédentes,
**caractérisé en ce que** :
au moins deux fréquences différentes sont induites dans le soudage inducteur sous pression à basse ou haute fréquence.

7. Procédé selon l'une quelconque des revendications précédentes,
**caractérisé en ce que** :
la pièce est une BLISK ou une BLING.
